**Europäisches Patentamt**

**European Patent Office**

**Office européen des brevets**

(11) Publication number: **0 026 083**
**A1**

# (12) EUROPEAN PATENT APPLICATION

(21) Application number: **80303257.2**

(22) Date of filing: **16.09.80**

(51) Int. Cl.³: **G 06 F 15/16**
**G 06 F 5/00, G 06 F 13/00**
**H 03 K 13/24**

(30) Priority: **19.09.79 IT 6883579**

(43) Date of publication of application:
**01.04.81 Bulletin 81/13**

(84) Designated Contracting States:
**DE FR GB**

(71) Applicant: **Ing. C. Olivetti & C., S.p.a.**
**Via G. Jervis 77**
**10015 Ivrea(IT)**

(72) Inventor: **Alberto, Ferdinando**
**via Paletti 6**
**I-10015 Ivrea (Turin)(IT)**

(72) Inventor: **Tos, Natale**
**via Castellamonte 7**
**I-10019 Banchette (Turin)(IT)**

(74) Representative: **Pears, David Ashley et al,**
**REDDIE & GROSE 16 Theobalds Road**
**London WC1X 8PL(GB)**

(54) **Multi-processor data processing system.**

(57) A central processor CPU (1) and associated system memory (3) utilise a word length which is a multiple of the word lengths employed by a satellite processor SPU (2) and its memory (4), e.g. 16 bits as against 8 bits. DMA transfers of information are nevertheless possible via a transfer controller (5) including a series of intermediate registers (8,9,10 and 11). To write from memory (4) into system memory (3) for example, two 8-bit words are transferred sequentially from memory (4) to registers (8 and 9). Then the contents of the registers are transferred in parallel as a 16-bit word to the system memory (3). Conversely a 16-bit word can be read from system memory (3) into the registers (10 and 11). Two 8-bit words are then transferred sequentially from these registers to the memory (4).

./...

EP 0 026 083 A1

Croydon Printing Company Ltd.

FIG.2

- 1 -

## MULTI-PROCESSOR DATA PROCESSING SYSTEM

The present invention relates to a multi-processor data processing system comprising at least two memories associated with two different processors and means for the transfer of data between the two memories.

Multi-processor systems are known, in which two or more processors converse between each other by means of a plurality of channels for the exchange of information.

Generally, a main processor is associated with a system memory; that processor processes the basic programs and performs functions of a general character. A plurality of secondary processors communicate with the main processor and are provided with smaller memories; these processors control the peripheral units. Each secondary processor controls an input/output device and processes specific programs of the peripheral units associated therewith. In this way, the system memory is entirely dedicated to the general programs and the main processor is relieved for the major part of the problems of controlling the input/out and peripheral units. This thus results in a higher level of efficiency in the conversation between the central processor and peripheral units. The transfer of information either between a peripheral unit and a memory of the secondary processor, or between such a memory and the system memory, can be facilitated by using DMA, that is to say, direct access to the memory involved in the exchange of information. For this purpose, there are devices which have a high degree of integration and which are known commercially as 'DMA controllers' (that is to say, controllers for direct memory access). These controllers are programmed by the processor which is involved in performing an exchange of information and they autonomously perform the exchange of the desired number of words between the memory of the processor in question and one or more peripheral units or another memory. Such controllers have direct access to the memories in question, interrupting the processors connected thereto for the period of time required for performing the transfer operations.

DMA information exchange, which may or may not be controlled by the appropriate controller, is always effected between memories with words of the same length. Consequently, in multi-processor systems in which provision is made for direct transfers of information between the various processors, use is made of components with the same parallelism: that is to say, which are capable of memorising information which is always of eight bits, always of sixteen bits, and so forth.

However, it is advantageous to use a central processor with a high 16 (or 32) bit processing capacity and commercial low-cost 8 bit microprocessors for controlling the problems of input-output of the various peripheral devices, each processor being provided with the corresponding memory.

Thus, there is the technical problem of easily and rapidly providing for direct transfers of operation between memories with different parallelism.

This problem is solved in the multiprocessor system according to the invention which is characterised in that a memory is capable of memorising words of multiple length with respect to the words of the second memory and that transfer means comprise a plurality of registers corresponding to said multiple and each capable of containing a word whose length is equal to that of said second memory and means for sequentially addressing said plurality of registers for each transfer operation.

These and other features of the invention will be more clearly apparent from the following description of a preferred embodiment of the system according to the invention, with reference to the accompanying drawings in which:

-3-

Figure 1 is the general block circuit diagram of a multi-processor system according to the invention,

Figure 2 is the block circuit diagram of the transfer controller incorporated in the system according to the invention,

Figure 3 is the circuit diagram of the secondary processor selected in the illustrated embodiment,

Figures 4 to 7 show some possible positions in the two memories, of the transferred information;

Figure 8 is an electrical circuit diagram of the control circuit shown in the Figure 2 diagram;

Figure 9 shows the timing diagrams relating to the signals of the transfer controller;

Figure 10 shows details of the registers of Figure 2; and

Figure 11 is a flow chart of the various operations controlled by the transfer controller.

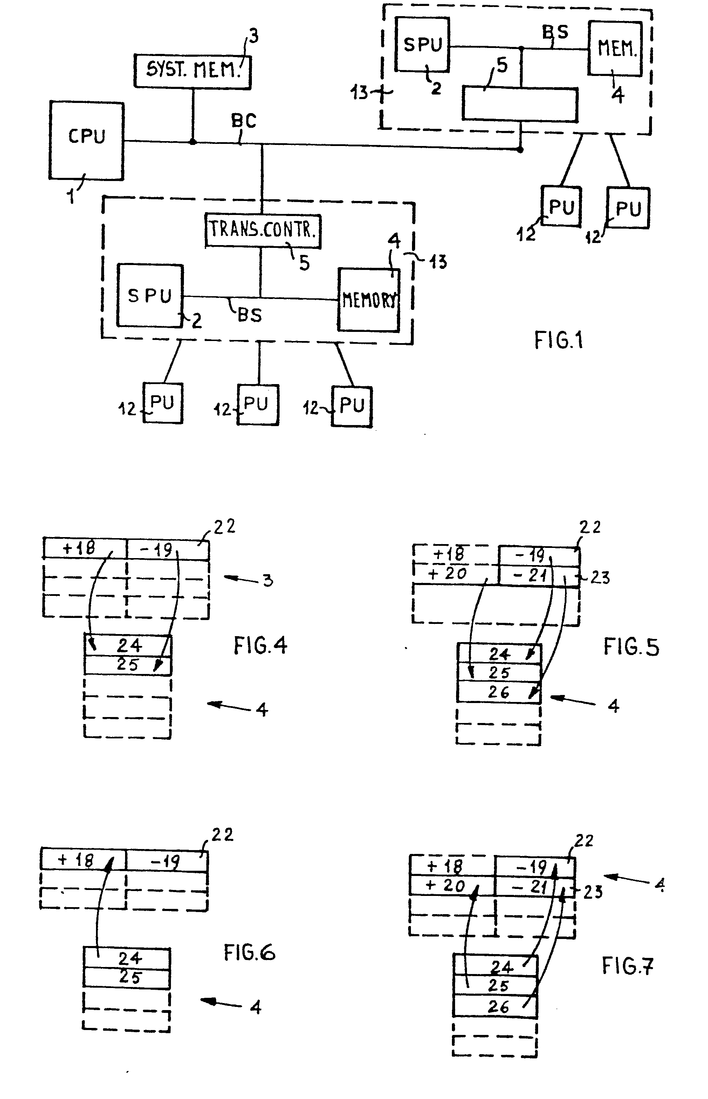

The multi-processor system of Figure 1 comprises a central processing unit CPU 1 which is connected to a system memory 3 and which is connected by way of a channel BC to at least one programmable peripheral control 13. Each control 13 which controls at least one peripheral unit (for example of the ribbon or video unit or the printing means) comprises a secondary processor (or satellite processor) SPU 2 which is connected by way of a channel BS to a memory 4 and to a transfer controller 5.

The main processing unit 1 may be any 16 or 32 bit computer or minicomputer which is on the market at the present time, while the secondary processor 2 may advantageously comprise an 8 bit microprocessor of commercial type.

In the preferred embodiment described hereinafter, the secondary processor SPU 2 comprises a microprocessor of type ZILOG Z80.

-4-

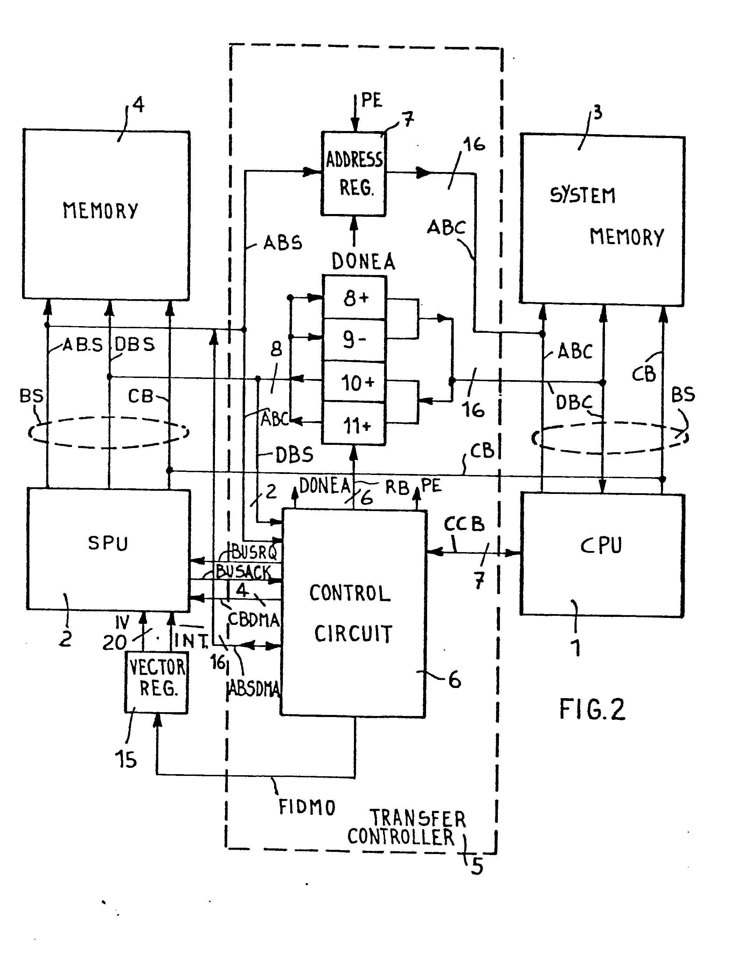

The channel BS which in Figure 2 connects the processor
SPU 2 to its own memory 4 and to the transfer controller
5 comprises an address channel ABS (16 bit), a channel DBS
(8 bit) and a control channel CB (4 bit).

The central processing unit CPU 1 comprises a central
16 bit unit of the type described in the present applicants'
Italian patent No 1 016 854. This unit is connected to
the system memory 3 and to the transfer controller 5
by means of an address (16 bit) channel (ABC), a (16 bit)
data channel DBC, and the control channel CB; all together
forming the channel BS in Figure 1. The transfer controller
5 comprises a control circuit 6.

The control circuit 6 is capable of producing a preset
enabling signal PE and a count-down signal DONEA, which
control an addressing register 7. The circuit 6 is also
capable of generating a control channel RB which controls
the input and the output of four registers 8, 9, 10 and
11 which are used for the exchange of information between
the memories 3 and 4.

It should be made clear at this point that the transfers
of information will be stated as being in the writing mode
if in the direction from the memory 4 (with 8 bits) to the
memory 3 (with 16 bits), and will be stated to be in the
reading mode, in the opposite case.

In any transfer operation, the control circuit 6
assumes control of the addressing channels ABS and ABC
and the control channel CB of both the processors
SPU 2 and CPU 1. If the transfer is in the writing mode,
the control circuit generally addresses the memory 4
twice in succession, enables the registers 8 and 9 to
memorise the two words successively present on the channel DBS, and controls the transfer in parallel of the two words, which is effected by means of the channel DBC, to the address indicated by the address register 7 of the memory 3.

If the transfer is in the reading mode, in a similar manner, the registers 10 and 11 are used, being charged in parallel by means of a word of the memory 3 and being discharged sequentially to the memory 4.

These operations are repeated automatically until the number of transfers for which the control circuit 6 is programmed is completed.

When a transfer of a certain field of information between the two memories is necessary, the secondary processor SVU 2 inputs to the control circuit 6 (by means of the data channel DBS and the address channel ABS) particular words which are used for programming the number and the type of desired transfer operations and the address of the first region in the memory 4, which is involved in the exchange.

The address of the memory 3 is predisposed by the secondary processor 2, charging the first address on the address register 7 which is enabled by the signal PE. If the transfer is in the readingmode, the control circuit 6, by means of a signal generated on a control channel CCB which connects the processing unit 1 to the control unit 6, places the central processing unit CPU 1 in an 'hold' condition.

The processing unit 1 is thus in a condition of isolation with respect to the memory 3 for a period of time equal to a cycle of access to the machine. During that period of time, the 16 bit information addressed by the address channel ABC is memorised, by means of the channel DBC, on the registers 10 and 11 which are opportunely enabled by the commands on the channel RB. At that point, the control circuit 6 inputs a 'hold' request BUSRQ to the secondary processor 2 which accepts the request by generating an acknowledgment signal BUSACK. With that the secondary processor 2 is also in a 'hold' condition. Owing to that, the control channel CB is connected to a control channel CBDMA which is generated by the control circuit 6; therefore the control circuit 6 is also in a condition of addressing memory 4 and generating signals for controlling the entire system. The two registers 10 and 11 which respectively contain the more significant part and the less significant part of the information from the memory 3 are discharged sequentially to the memory 4 at the addresses generated by the control circuit 6 on an address channel ABSDMA which is connected to the address channel ABS.

This control cycle is repeated successively by the control circuit 6 until the number of transfer operations for which it had been programmed is completed.

Obviously, in each cycle, both the address present on the register 7 and those generated on the channel ABSDMA are up-dated.

When the last byte writing operation envisaged has been performed, or when any anomoly gives rise to the necessity to suspend the transfer operations, the control circuit 6 generates an input signal FIDMO to the register 15 which contains given bit configurations referred to as 'interruption vectors'. The register 15, in accordance with a process which is known per se and which is not described in greater detail hereinafter, inputs on channel IV to processor 2 an interruption signal $\overline{INT}$, which is capable

-7-

of restoring given working conditions in respect of the processor 2.

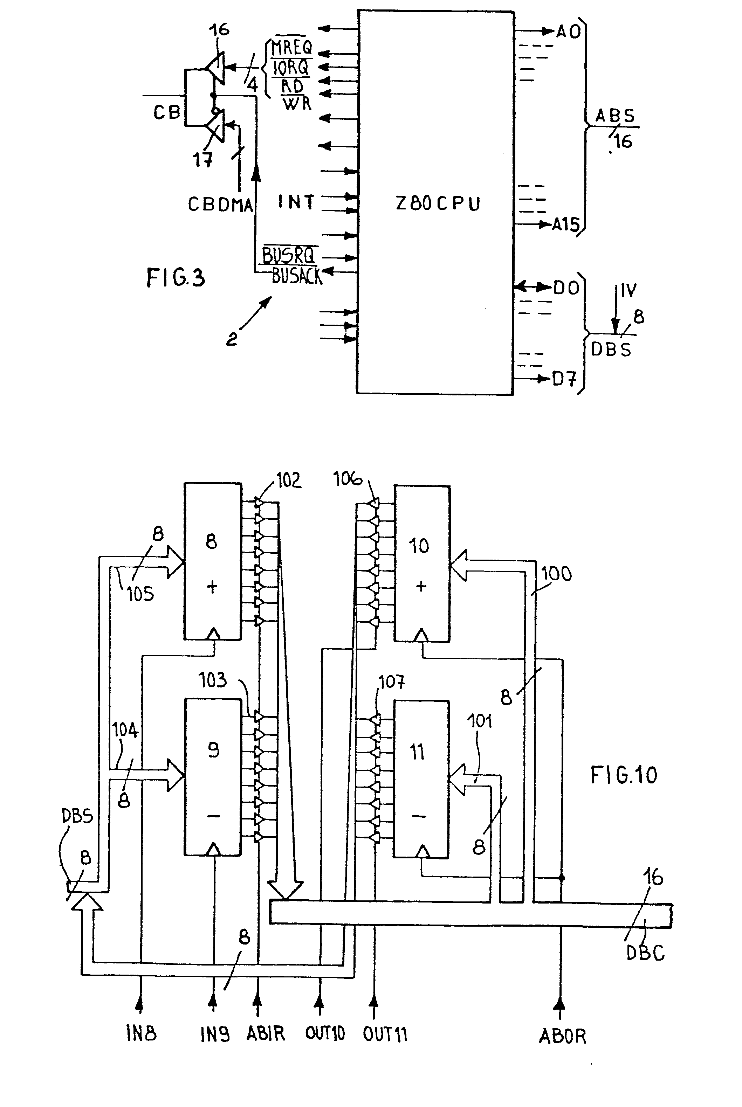

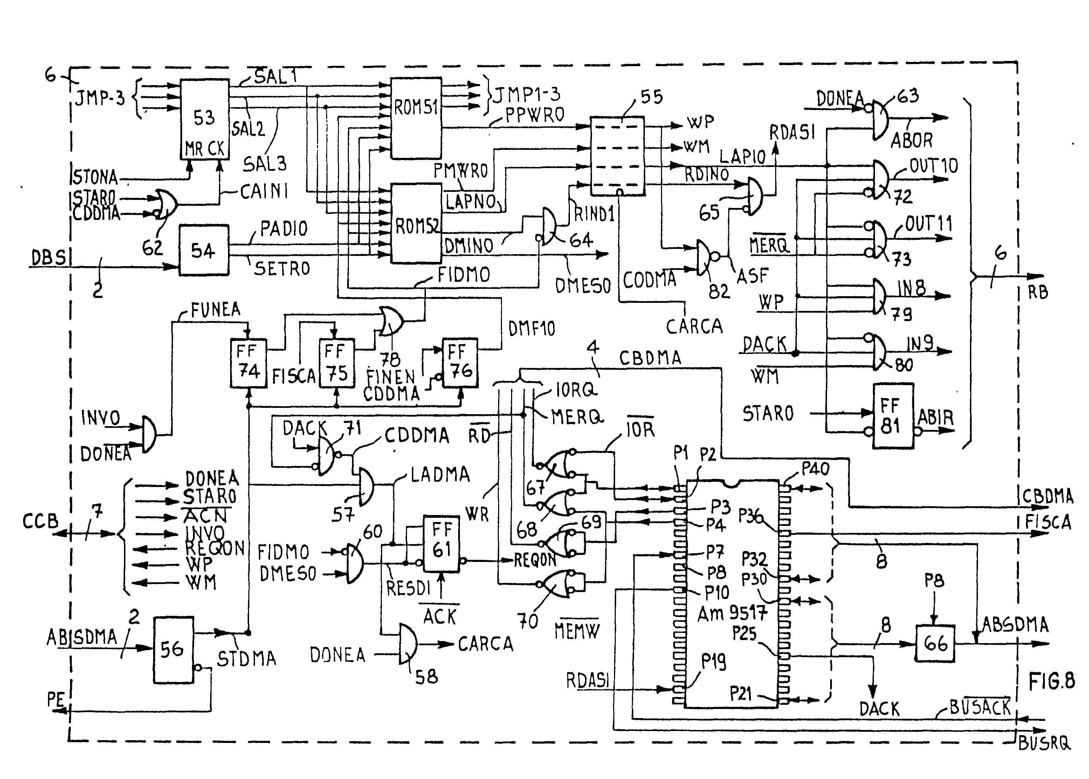

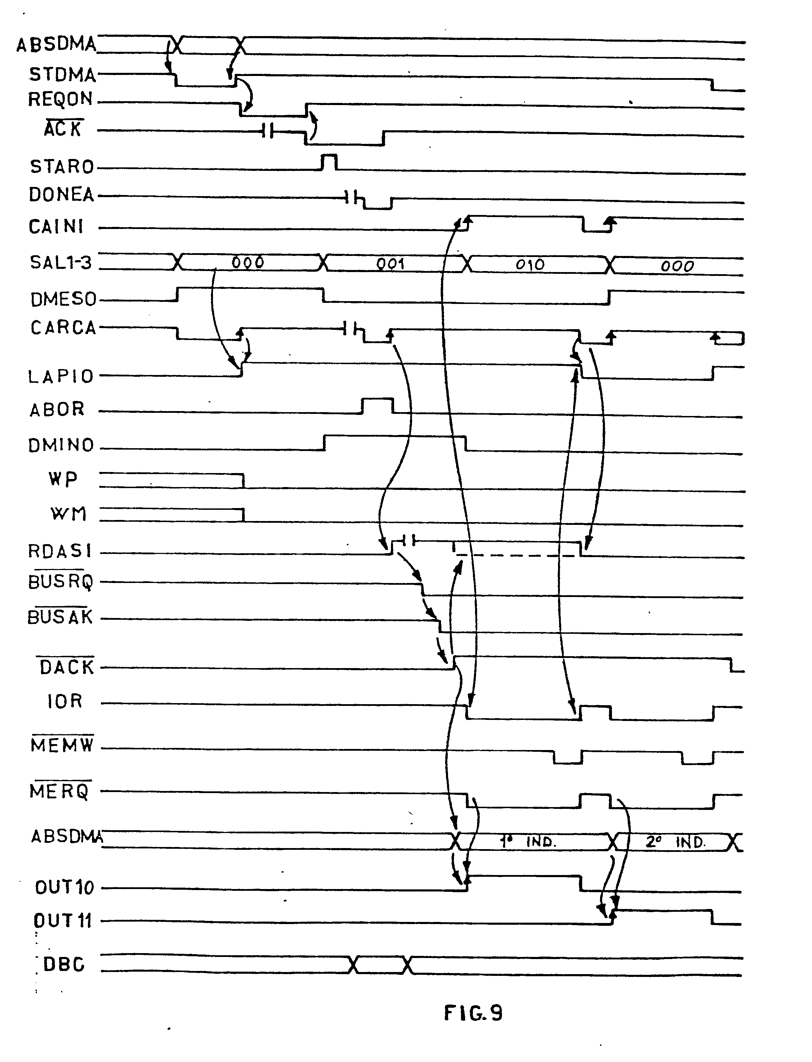

Figure 3 shows the use of the various terminals of the microprocessor ZILOG Z80 used for carrying out the functions of the secondary processor in the present embodiment.

The drawing clearly shows the correspondencies between the channels of Figure 1 and the various terminals of the microprocessor in question.

As regards the various modes of operation of the processor and the use of various terminals, reference is made to the various publications issued by ZILOG.

It should simply be stated that, upon the signal BUSRQ produced by the control circuit CC, the processor is isolated from the channels ABS and DBS or, as is stated in technical terms, it puts such channels in 'tri-state' and in return produces the signal $\overline{\text{BUSACK}}$. The signal $\overline{\text{BUSACK}}$ controls the 'tri-state' devices 16 and 17 in such a way as to connect to the channel CB under normal operating conditions of the microprocessor, the control signals $\overline{\text{MREQ}}$, $\overline{\text{IORQ}}$, $\overline{\text{RD}}$ and $\overline{\text{WR}}$ and, in hold conditions, the control channel CBDMA from the control circuit 6.

The mode of operation described herein (in the reading mode) with reference to Figures 2 and 3 envisages access to the location of a 16 bit word of the memory 3, and the break-down by means of the registers 10 and 11 into two parts each of 8 bits, which will be respectively called the 'more significant byte' and the 'less significant byte'.

In the event of a transfer in the writing mode, these operations take place in precisely the opposite manner.

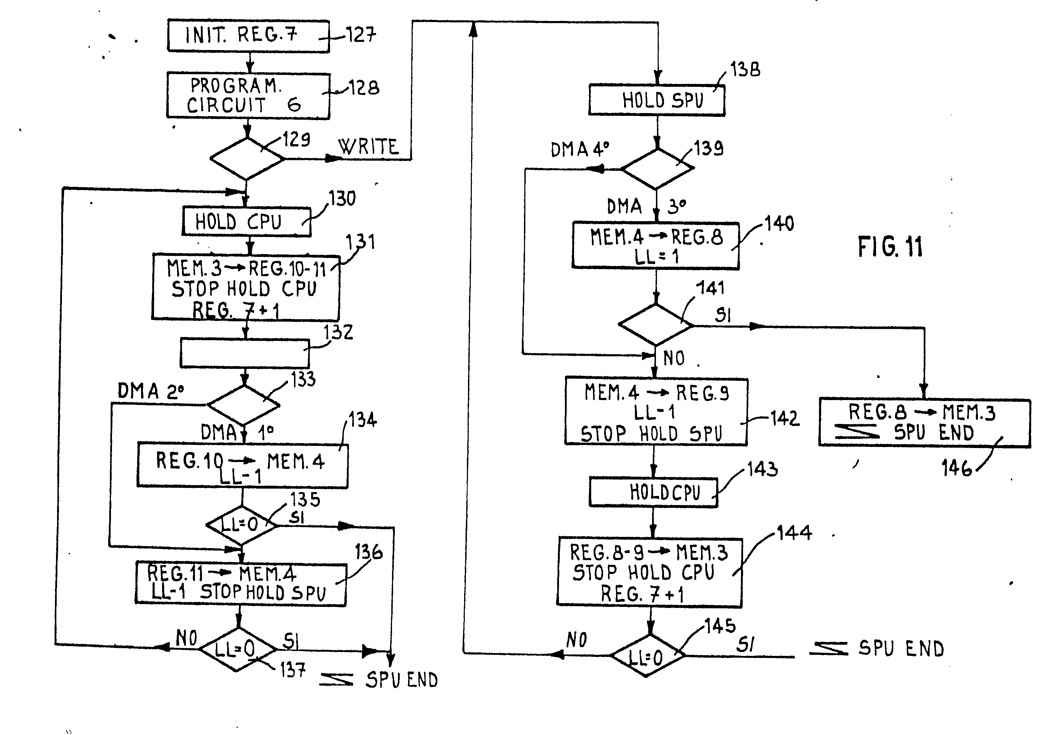

In addition, as will be seen more clearly from the description with reference to Figure 8, the control circuit 6 also controls exchanges of information between the two
memories 3 and 4, which comprise selective access to the
location of the more significant byte (which will also be
referred to as the 'first byte') or to the less significant byte
(referred to as the 'second byte') of each word of information
of the memory 3.

As regards the mode of access to the locations of
the individual bytes in the memory 3, reference is also
made to the above-mentioned patent.

Figures 4, 5, 6 and 7 diagrammatically show four
different cases which can occur in the transfer of the first
information word between the two type memories 3 and 4.

These cases will be referred to respectively as
DMA of the first, second, third and fourth type.

The transfer operations illustrated take place as from
the location 22 of an information word in memory 3 or
location 24 of a word of memory 4.

The simplest transfer operations are those in the
reading mode in Figure 4, being DMA of the first type, and
that in the writing mode of Figure 6, being DMA of the third
type. These are concerned with the case in which both the
locations 18 and 19 of the bytes which comprise the first
information word at location 22 are involved in the transfer
to or from the locations 24 and 25 of memory 4. In that case,
access to the memory 3 is in relation to the entire information
word, as already described with reference to Figure 2.

The DMA of the second type as shown in Figure 5 is on
the contrary the case involving a transfer in the reading
mode, wherein only the second byte contained in the location
19 of the first information word read from the memory 3 is to be written in memory 4. In this case also, there occurs block transfer of the first information word from the position 22 of memory 3 to the registers 10 and 11 in Figure 2; however, the control circuit 6 is programmed for discharging on channel DBS only the register 11 containing the second byte and transferring it to position 24 in memory 4.

After this, normal transfer operations of the first type will follow on, that is to say, the word contained at location 23 will go to positions 25 and 26, and so forth.

The DMA of the fourth type as shown in Figure 7 is the case involving a transfer operation in the writing mode, wherein the first word read from the location 24 of memory 3 is to be transferred to the location 19 (of the second byte) in memory 3. In that case, the control circuit 6 is programmed so as to perform, during the first transfer cycle, one access to the memory 4, memorise the word read from the location 24 on the register 9 and finally enable the transfer thereof to memory 4, by accessing to the single location 19 of memory 3.

The control circuit 6 (see Figure 8) essentially comprises a programmable DMA controller 50 and two memories 51 and 52 of ROM type which are addressed by a counter 53 and a condition register 54.

As regards the controller 50 which is used in the present embodiment, this is a 'multimode DMA controller AM 9517' produced by Advanced Micro Devices. Therefore, for the electrical description of the controller 50, reference is made to the specifications issued by the company in question.

-10-

It should be stated in the present description that the numbers of the various terminals are preceded herein by the letter P in order to avoid misunderstandings, and only the use of the main terminals connected to the other devices of the system according to the invention will be described herein.

The controller 50 exchanges control signals by means of the channel CBDMA and the line BUSACK in particular with the secondary processor SPU 2 and its memory 4.

The controller 50 is programmed in known manner for initiating the transfer operations between the two memories 3 and 4 on behalf of the processor 2, by way of the address channel ABSDMA. This programming includes the address of the first memory 4 location and the total number of locations in such memory which are involved in the information transfer operation to be carried out.

Based on that data, the controller 50 will automatically address, by way of the channel ABSDMA, the locations in memory 4 which are intended to receive or give information, while it generates the appropriate commands by means of the control channel CBDMA.

The ROM memories 51 and 52 essentially contain four routines, one for each type of transfer operation: DMA of the first, second, third and fourth type.

The address of the routine appropriate to the desired transfer operation is selected in the following way.

A condition register 54 is charged for the desired transfer operation by the processor 2 by way of the channel DBS, and generates input signal PADIO and input signal SETRO to the memories 51 and 52. The signals PADIO and SETRO identify the two more significant bits of the address of the preselected routine and thus its position in the memory; while a counter 53 produces by means of the signals SAL 1-3, the successive addresses of the various locations within the preselected routine. Finally, two signals DMFIO and FIDMN which are generated in the event of abnormal happenings during an information transfer operation force the addresses of particular control routines, discussed hereinafter.

The commands generated by the memories 51 and 52, jointly with the commands and addresses generated by the controller 50, control the operations required for performing the transfer of information between the two memories.

The remaining channels which connect the controller 6 to the other devices are the control channel CCB and the channel RB.

All the control signals exchanged with the central processing unit CPU 1 pass through the channel CCB; for a detailed description on the significance of those control signals, reference should again be made to the present applicants' patent.

Suitable combinations of signals present on the address channel ABSDM which are decoded by a decoder 56 represent as many initial commands transmitted by the secondary processor 2 to the control circuit 6.

The channel RB contains all the command signals required for controlling the registers 9 to 11.

Table 1 below shows the groups of logic states of the signals WP, WM and LAPIO, which are generated by a command register 55 which is necessary for selecting reading or writing of entire words or bytes in each of
the two memories 3 and 4.

### Table 1

|  | WP | WM | LAPIO |
|---|---|---|---|
| Reading entire word from mem. 3 | O | O | 1 |
| Writing entire word in mem. 3 | 1 | 1 | O |
| Writing byte + in mem. 3 | 1 | O | O |
| Writing byte - in mem. 3 | O | 1 | O |
| Reading/writing byte + in mem. 4 | O | X | 1 |
| Reading/writing byte - in mem. 4 | O | X | O |
| Read/write single byte - in mem. 4 | 1 | X | O |

The signals WP and WM also select   the more significant
or less significant byte in a word addressed in the memory 3.

Their specific action will be set forth in the following
circuit description.

Referring to Figures 8 and 9 and to Table 2 below,
which diagrammatically sets out a routine for commanding
a transfer DMA of the first type, there is shown the
sequence of signals of the circuit 6 during this type of
transfer operation.

In Table 2, in each  column of the area N, there is shown
the name of a corresponding signal of the address of the
ROM 51 and 52 and the content, that is to say, the word
generated by the ROM corresponding to the address in
question.

Table 2

| N | ADDRESS | | | | | | | | CONTENT | | | | | | | | COMMANDS |
|---|---|---|---|---|---|---|---|---|---|---|---|---|---|---|---|---|---|
| | S E T R O | P A D I O | F I D M O | D M F I O | | S A L 3 | S A L 2 | S A L 1 | P P W R O | J M P 3 | J M P 2 | J M P 1 | L A P N O | D M E S O | D M I N O | P M W R O | |
| 01 | 0 | 0 | 0 | 0 | 0 | 0 | 0 | 0 | 0 | 0 | 0 | 1 | 1 | 1 | 0 | 0 | DMA to CPU 1 in reading mode |
| 02 | 0 | 0 | 0 | 0 | 0 | 0 | 0 | 0 | 0 | 0 | 1 | 0 | 1 | 0 | 1 | 0 | DMA to SPU 2 in byte writing mode |
| 03 | 0 | 0 | 0 | 0 | 0 | 0 | 1 | 0 | 0 | 0 | 0 | 0 | 0 | 0 | 0 | 0 | DMA to SPU 2 in byte writing mode |
| 04 | 0 | 0 | 1 | 0 | 0 | 0 | 0 | 1 | 0 | 0 | 0 | 1 | X | 0 | 0 | X | STOP for outside mem. 3 |
| 05 | 0 | 0 | 1 | 0 | 0 | 0 | 1 | 0 | 0 | 0 | 1 | 0 | X | 0 | 0 | X | STOP for end refer |
| 06 | 0 | 0 | 0 | 1 | 0 | 0 | 0 | 0 | 0 | 0 | 0 | 0 | X | 0 | 0 | X | STOP for end by SPU 2 |

At the beginning of the information transfer operations, the processor SPU 2 performs three predisposition operations. First of all, it predisposes at the controller 50, as stated, the initial address of the zone involved in the transfer and the number of pieces of information to be transferred, and secondly it predisposes by means of the channel DBS the condition register 54: in the case of DMA of the first type, the register 54 compels to a value '0' the signals PADIO and SETRO (see Table 2) which select the appropriate region of the memory 51 and 52. Finally, by means of the channel ABS and the decoder 56, it activates the signal PE which permits programming of the address register 7 of Figure 2 with the initial address of the region
of the memory 3 involved in the transfer.

After this initialisation operation, and still by way
of the channel ABSDMA and the decoder 56, the processor 2
activates a 'start' signal STDMA. The first front edge of the
signal STDMA will set to zero the counter 53 which will thus
produce the configuration 000 on lines SAL 1 to 3.

This configuration will address a first command word in
the memories 51 and 52. As will be clear by viewing the first
row in Table 2, this command word contains an address JMP 1-3
which predisposes the counter 53 for the next address, two
signals LAPNO and DMESO at a high logic level and three
remaining signals DMINO, PPWRO and PMWRO at a low level.

If no irregularity in the transfer operation has occurred,
the signal FIDMO which is at a low logic level enables
an AND-gate 60 and the signal DMESO activates the input RESDI
of a flip-flop 61.

The logic levels of a signal DACK and a signal $\overline{\text{MERQ}}$
which are clearly visible from the diagrams in Figure 9
generate in this phase, by way of an AND-gate 71, an enabling
signal CDDMA which is applied to an input of an AND-gate 57
which produces a signal LADMA at its output. The signal LADMA
is applied to the input of a flip-flop 61 and an AND-gate
58 which is enabled by a signal DONEA at a high logic level,
and which produces a signal CARCA at its output. Consequently,
the signal LADMA (Not shown in Figure 9) and the signal
CARCA re-copy the signal STDMA, in this phase. At the rising
edge of STDMA the flip-flop 61 then switches over and lowers
a signal REQON; that signal is part of the channel CCB and
effects a 'hold' request to the processing unit CPU 1. At the same time, the signal CARCA enables the command register
51 to re-output the same signals PPWRO, PMWRO, RIND 1 and
LAPNO which respectively take the designations WP, WM,
RDINO and LAPIO.

The output signals of the memories 51 and 52 are
at that time those generated by the word 01 of Table 2;
if the signals WD, WM and LAPIO then respectively assume
the values 0, 0 and 1 which designate the request in
writing of an entire word from the memory 3.

In particular, the signals WP and WM are part of the
control channel CCB while the signal LAPIO enables an AND-gate
63.

The processing unit 1 acknowledges the request made
by the signal REQ ON by activating a signal $\overline{ACK}$ (Figure 9),
and also produces a signal STARO which represents a 'start'
signal on the part of the central processing unit 1 to the
circuit 6; these signals are also part of the control
channel CCB.

The signal $\overline{ACK}$ resets the flip-flop 61 (Figure 8)
and thus the signal REQ ON; while the signal STARO, by
way of an OR-gate 62, activates a clock signal CAINI for the
counter 53.

The address SAL 1-3 at the output of the counter 53
is increased; consequently, the output commands of the memories
51 and 52 are up-dated as at location 02 in Table 2 and as
shown in Figure 9. The signal DMINO which is activated
in place of the signal DMESO produces, by way of a gate 64,
a signal RIND 1 which is inputted to the command register
55. The gate 64 is normally enabled and is disabled only
in the event that the signal FIDMO signals abnormal transfer conditions, as will be seen hereinafter.

At the same time, the memory 3 which is isolated from the processing unit CPU which is in a 'hold' condition is addressed by the register 7 of Figure 2 and produces on channel DBC the required (16 bit) information word.

The presence of the information word on the channel DBC is signalled by the validity signal DONEA.

The signal DONEA which is activated by the processor 1 and which is included in the control channel CCB now has a double action: it activates a signal ABOR by way of an AND-gate 63 which is enabled during this phase of the operations by the signal LAPIO, and activates the signal CARCA, by way of the AND-gate 58.

The signal ABOR is part of the input channel RB to the registers 8 to 11 (see Figure 2) and serves to enable the registers 10 and 11 to memorise the information word present on the channel DPC; this will be more clearly evident from the detailed description of Figure 10.

The signal CARCA which is active for the second time transfers to the output of the command register 55 the signal RIND 1 which takes the designation RDINO, while the other output signals remain constant. The signal RDINO activates, by way of an AND-gate 65 which is enabled by the high level of a signal ASF, the signal RDASI which is an input to the terminal PU of the circuit 50. This signal is then interpreted by the circuit 50 as a request for access DMA, from a peripheral unit.

At that point, the DMA controller 50 activates the terminal P10 to effect a 'hold' request to the relevant

processor. In the present embodiment, the terminal 10
of the controller 50 activates the signal $\overline{BUSRQ}$ which, as
pointed out with reference to Figures 2 and 3, puts the
processor 2 in a hold condition and connects the control
channel CBDMA of the controller 50 to the control channel CB.
The processor 2 in turn signals its own hold situation
by way of the signal $\overline{BUSACK}$ inputted to the terminal P7
of the controller 50 and the controller 50 produces the
commands required to produce the transfer to the memory
4 of the more significant byte and the less significant byte
which are respectively stored in the registers 10 and 11
(see Figure 2).

These commands consist of generation of the output signal
DACK at the terminal P25 and of the address of the first
memory 4 location involved in the transfer.

The addresses are generated in known manner on the channel
ABDMA by the terminals P32 to P40 (excluding the terminal P36
which generates the signal FISCA) and the terminals P21 to
P30 which can memorise a value on a register 66 enabled
by the terminal P8.

During generation of the address, the controller 50
successively activates the control signals $\overline{IOR}$ and $\overline{MEMW}$
which are outputs at the terminals P1 and P4, the use of
which is known from the above-quoted publications. These
two control signals and the output signals at terminals
P2 and P3 are logically exchanged by the gates 67, 68,
69 and 70 for the sole purpose of producing the signals
$\overline{IORQ}$, $\overline{MERQ}$, $\overline{RQ}$ and $\overline{WR}$ which are compatible with those
generated by the processor SPU 2.

-18-

As regards the logic of circuit of Figure 8, the two signals MERQ and DACK are of interest. The signals MERQ and DACK enable two AND-gates 72 and 73 which respectively generate an enabling signal OUT 10 and an enabling signal OUT 11 respectively for the output of the register 10 and the register 11. The input signal LAPIO to the gates 72 and 73 activates firstly the signal OUT 10 and then the signal OUT 11 in order successively to pass the bytes contained in the registers 10 and 11, on the channel DBS of the memory 4, which is in the meantime addressed by the controller 50.

In addition, the signals MERQ and DACK, which are combined by way of the NAND-gate 71, now lower the level of the signal CDDMA. The signal CDDMA and the signal LADMA copy the signal MERQ in this phase of the operations. The descending edge of the signal CDDMA activates by way of the gate CR 62 the clock signal CAINA whereby the counter 53 generates the address corresponding to the location 03 of Table 2.

As will be seen, all the outputs of the memories ROM 51 and 52 are set to value '0'. The following ascending edge of the signal LADMA (that is to say also of MERQA) determines by way of the gate 58 an active edge of the input signal CARCA to the command register 55.

The output signal LAPIO from the command register 55 is set at value '0' which determines enabling, as stated above, of the output of the register 11 and dispatch of the less significant byte to the memory 4 addressed with the second address by the DMA controller 50.

A further descending edge of the signal MERQ again activates in the manner just described above, the clock signal CAINA for the counter 53 whereby there is again
generated the address of the location 01 of Table 2 and
the command word is generated at the output from the memories
51 and 52, being required to effect reading of the next
information word to be transferred.

The cycle is thus automatically repeated until the
information field to be transferred is exhausted, the
number thereof being up-dated in known manner by an internal
register of the controller 50.

The addresses of the locations 04, 05 and 06 of Table 2
are forced by the signals DMFIO and FIDMO in the cases
in which the transfer operation is to terminate.

The circuit of Figure 8 includes by way of example the
circuits for automatically producing three types of
interruption.

The anomalous interruption signals are a signal INVO
which is generated by the memory 3 and which indicates the
condition of address outside of the permitted region of the
memory and a signal FINEN which indicates an interruption
produced by the processor SPU 2 for example by means of a
routine which is processed in the time intervening between
two transfers. The normal end of the programmed transfer
operations is on the contrary indicated by the controller
50 by means of a signal FISCA which is generated by the
terminal P36 in known manner. These signals are not shown
in the diagrams of Figure 9. These three signals are
respectively memorised by three flip-flops: 74, 76 and
75. The signal INVO is simply conditioned by means of an
AND-gate 77 by the high level of DONEA, that is to say,
the absence of data on the channel DBC.

When one of the flip-flops 74 and 75 is activated by the corresponding interrupt signal, the output signal FIDMO of the OR-gate 78 goes to a high logic level and the address of the words 04 or 05 of Table 2 is forced in the memories 51 and 52. On the contrary, in the event of interruption on the part of the processor SPU 2, the flip-flop 76 (reset by the signal CDDMA) is activated and the signal DMFIO goes to a high logic level, producing the address of the word at location 06 of Table 2.

The distinction between the words at locations 04 and 05, or between the types of interruption which has occurred, depends on the situation of memory 51 and 52 present at the moment of the interruption; both the words addressed however represent a block for the circuit 6. The word at the location 06 on the other hand causes general reset of the signals.

Other words can be programmed to produce any type whatever of control on the circuit 6; it is important to remember that each word always contains the address JMP 1-3 of the following word, by means of which the operations required for causing the interruption are linked together sequentially and the circuit 6 also proceeds in this case autonomously in such a way as to conclude the transfer operations without engaging the programs of the processors 1 or 2. Hitherto, reference has been made to a transfer DMA of the first type, that is to say, comprising the transfer of entire words (16 bits) from the memory 3 to the memory 4.

It is important to note that if the transfer is of the second type, that is to say, it comprises writing in the memory 4 the single second byte registered in the register 11, the DMA controller 50 must perform a single access in writing to the memory 4. This is effected by deactivating the request signal RDASI (input on terminal P19) as soon as the controller
50 has gained control of the memory 4. In the event of
DMA transfer of the second type in fact, the programs
of the memories 51 and 52 (which are not described but which
can be readily deduced from the foregoing description) are
such as to produce a high level of the signal WP during
the operation of writing in the memory 4 (see also Table 1).

The signal WP controls an AND-gate 82 in such a way
that the output signal ASF is reset by the rising edge of the
signal CODMA. The output signal RDASI of the gate 65
is also reset, as will be seen by the broken line in Figure
9, with the result that the controller is disenabled from
effecting the second access to the memory 4.

This mode of operation of the controller 50 is
clearly described also in the above-mentioned specifications
issued by the company 'AMD'.

The other types of transfer operation are performed
in a generally similar manner. The values of the signals
which identify the remaining types of transfer operation
are clearly set out in Table 1.

In the cases of transfer in a writing mode for
example one or other or both of the signals WP and WM are
at high logic level; corresponding to those signals is the
selection in a certain location in memory 3 of the more
significant byte or the less significant byte or both,
and, in the circuit of Figure 8, the selective enabling of
two AND-gates 79 and 80. The signal LAPIO also controls
one of the two gates 79 and 80 for activating a signal
IN 8 or a signal IN 9. As will be seen from the detailed view of Figure 10, the signals IN 8 and IN 9 respectively
enable the registers 8 and 9 to memorise the word or words
which are successively present on the channel DBS. The
signal DACK also times    the generation of the signals
IN 8 and IN 9. The signal LAPIO at a low  logic level and
the signal STARO jointly control a flip-flop 81 (see
Figure 8) for generating a signal ABIR which in parallel
enables the outputs of the registers 8 and 9 (see Figure
10).

Referring to Figure 10, the practical connections and
the number of lines forming each channel will now be clearly
seen therein. A 16 bit word originating from the memory
3 on the channel DBC is divided into two 8 bit words, or
bytes, on the channel 100 (more significant byte) and on
the channel 101 (less significant byte).

In contrast, a 16 bit word directed towards the memory
3 is formed by the 16 outputs of the gate 102 (more
significant byte) and the gate 103 (less significant byte)
which are enabled simultaneously by the signal ABIR:
they are the signals WP and WM for enabling writing in the
memory 3 of one of the two bytes or both bytes.

An 8 bit word originating from the memory 4 on the
channel DBS is inputted both to the register 8 and to the
register 9 by means of the channels 104 and 105, but is
memorised only in the register which is enabled by the
corresponding signal IN 1 or IN 2; similarly, a word
directed to the memory 4 is formed either by the 8 outputs
of the gates 106 of the register 10 (first byte to be
written in the memory 4) or by the 8 outputs of the gates
107 of the register 11 (second byte to be written in the
memory 4), which are enabled respectively by the signal OUT 10 and the signal OUT 11. The various functions which are performed automatically by the transfer controller 5 (Figure 2) solve as many problems in the exchange of data between the memories 3 and 4 both in the case of access to the entire words of memory 3 and in the cases of access to the individual bytes and also in the cases of abnormal events during the transfer operations.

The flow diagram of Figure 11 synthesizes the mode of operation of the controller 5 in the cases described hereinbefore and in some other cases. The blocks 127 and 128 represent initialisation of the address register 7 and the control circuit 6 (see Figures 2 and 8). With the selection 129, the operations diversify according to whether a transfer in the reading or writing mode is involved. The remaining blocks 130-137 which are shown in the left-hand part of Figure 11 are concerned with transfers in the writing mode. Thus, the circuit 6 puts the memory 3 in a hold condition (block 130). Then, at block 131, the first word of memory 3 is transferred into the registers 10 and 11 with up-dating of the address register 7. With block 132, the control circuit 6 puts the secondary processor SPU 2 in a hold condition and takes possession of the control and address channels CB and ABS respectively. The selection 133 distinguishes a transfer DMA of the first type from one of the second type. If the transfer is of the first type, the contents of the registers 10 and 11, that is to say, the more significant byte and the less significant byte are transferred sequentially to the memory 4 (blocks 136 and 136). At each transfer of a byte, a counter which is internal to the DMA controller 50, which is referred to as LL, is decremented.

With the block 136, an end is put to the hold situation of the processor 2. The selections 135 and 137 represent the possibility, on each decrement, that the
number of bytes to be transferred is exhausted, whereupon
the secondary processor is interrupted in the ways described
above. In the event that a transfer DMA of the second type
is involved, only the less significant byte of the first
word memorised on the register 11 is to be transferred,
thus going directly from the block 133 to the block 136.
After the block 137, the operations are repeated, starting
from block 130, in the manner illustrated, until the
programmed transfer is completed, that is to say, when
LL = 0.

The right-hand part of Figure 11 synthesises the cases
of transfer operations in the writing mode. The procedure
is the reverse of the above-described situation. First
of all, with block 138, the control circuit 6 puts the
processor 2 in a hold situation and gains control over
the channels ABC or CB. The selection 139 distinguishes
a transfer DMA of the third type from one of the fourth
type. If the transfer is of the third type, two words are
memorised respectively in the register 8 and in the register
9 of Figure 2 in order respectively to form the more
significant byte and the less significant byte of the word
to be written in the memory 3 (blocks 140 and 142).

In each transfer, the counter LL is decremented. If
the number of words of the memory 4 to be transferred
is exhausted with the word which is memorised in the register
8, being at block 141, that word is immediately written
in the memory and an end signal for the processor 2
(block 146) is generated. When the two registers 9 and 10
have memorised the respective bytes, the processor 1
is put into a hold condition (block 143) and parallel
transfer of the two bytes to the memory 3 is performed (block 144). After that, the hold situation for the
processor 1 is terminated and the address counter 7 is
incremented. If the counter LL has reached the value 0,
the end signal is generated for the processor 2 (selection
145), otherwise the circle is repeated starting from the
block 138 until the programmed number of transfer operations
has been completed.

For the sake of simplicity, the diagrammatic view of
Figure 11 does not show the possibilities of anomalous
interruption of the transfer operations between the memories
3 and 4, as described with reference to Figure 8.

As stated hereinbefore, an anomaly signal can
force given routines in respect of the memories 51 and 52.
In the diagrammatic view of Figure 11, this can be
represented merely by as many jumps (forced at the moment
of the interruption) towards blocks representative of the
routines which are predisposed to cause the interruption
which has taken place. With reference to Figure 8 and
Table 2, the automatic control of two interruptions for
an anomaly in the transfer operation in the course of
performance was described: that is to say, address outside
the permitted memory 3 region (indicated by the signal
INVO) or interruption from the secondary processor 2
(indicated by the signal FINEN).

It is evident that the memories 51 and 52 of Figure
8 can be programmed to produce the appropriate commands
for any case whatever of interruption that the persons
skilled in the art consider it appropriate to take into
account and it is sufficient to proceed so that the
interruption signal which may be generated determines the
corresponding address of the memories 51 and 52 in order suitably to control the interruption which has occurred.

In the preferred embodiment shown in Figure 2, use is made of two known processors 1 and 2 which are respectively capable of processing 16 and 8 bits. The use of processors which are capable of processing data of any number of bits whatever, provided that one is a multiple of the other, therefore involves trivial modifications in the circuits included in the transfer controller 5 of Figure 2. Indeed, it is sufficient to adapt the number of registers 8 to 11 to the degree of multiplication existing between the lengths of the data processed by the two processors, so as to break the words of the central processing unit 1 down into the necessary number of words of the secondary processor 2 and vice-versa, and it is just as simple to program the memories 51 and 52 (which may also comprise a single memory) to generate the sequence of commands necessary for dealing with any number of such registers and the addressing of any memory with any transfer problem, according to the logic system used.

In addition, the secondary processor SPU 2 used in the present embodiment generates 16 bit addresses which are suitable of addressing directly both the memory 3 and the memory 4. Even this finally is not a limitation, insofar as, in the case in which the processor 2 used has an address channel ABS which has a lower number of bits with respect to the address channel ABC of the memory 3, it is sufficient to use devices which are known to those skilled in the art. For example, memorisation on a suitable register of a part of the address required , as described with reference to the controller of Figure 8. Any other modifications or innovations derived from the present invention are deemed to be included within the scope of the invention.

## CLAIMS

1.    A multi-processor data processing system comprising
at least two memories associated with two different processors,
and means for transferring data between said two memories,
characterised in that a first memory is capable of memorising
words of multiple length with respect to the words of the
second memory and said transfer means comprise a plurality of
registers corresponding to said multiple and each capable of
containing a word whose length is equal to that of the second
memory and control means for controlling the reading or writing
of each of said plurality of registers in each transfer
operation.

2.    A system according to claim 1 characterised in that said
transfer means comprise first addressing means which are
predisposed at the beginning of an exchange of information
comprising at least one transfer in one or other of the two
directions, for addressing the regions of said first memory
involved in said transfer operations.

3.    A system according to claim 2 characterised in that
said first addressing means comprise a counter which is
precharged by one of said processors at the beginning of said
exchange of information and are counted down by said control
means in each completed transfer.

4.    A system according to claim 2 or claim 3 characterised
in that said transfer means comprise addressing means which
are controlled in each operation of reading or writing performed
on the second of said memories for progressively addressing
said second memory.

5.    A system according to claim 4 characterised in that said means for addressing said second memory are programmed by said processor at the beginning of said exchange of information.

6.    A system according to one of claims 2 to 5 wherein said first memory comprises a series of locations capable of memorising said words, said locations comprising a plurality of sub-regions each capable of containing a part of said words of length equal to that of a word of said second memory, each said location being in correspondence with one of said registers, characterised in that, in each transfer from said first memory to said second memory, said processor programs said control means for controlling the parallel registration of an entire word of said first memory on said registers, the selection of said registers containing said parts and the sequential writing of said words selected on said second memory.

7.    A system according to claim 6 characterised in that said transfer means comprise second addressing means which are programmed by said processor for addressing, within a location of said first memory which is addressed by said addressing means, said sub-region.

8.    A system according to claim 7 characterised in that said sub-regions are two in number, two registers of said plurality correspond to said sub-regions, and that said second addressing means selectively activate one of two control signals inputted to said first memory in dependence on the sub-region addressed.

9.    A system according to claim 8 characterised in that in each transfer from said second memory to said first memory, said processor programs and control means for controlling the selection of said registers, the registration of the words read from said second memory on said selected registers and the transfer in parallel of the words from said selected registers to said addressed sub-regions.

10.    A system according to claim 9 characterised in that said control means control a plurality of types of data transfer between said distinct memories according to the direction of the data which are transferred between said memories and according to which of said sub-regions of said location addressed in said first memory are involved in said transfer, and that said control means comprise programmed means containing a plurality of programs, one for each type of transfer, and selection means controlled by said processor for selecting the programs adapted to the type of transfer to be performed.

11.    A system according to one of the preceding claims characterised by counting means included in said control means which are predisposed by said processor at the beginning of a plurality of successive information transfer operations and which are counted down in each transfer in reading or writing words of said second memory, said counting means being capable of memorising the number of said transfer operations and signalling completion of said exchange to said control means.

12. A system according to claim 10 or claim 11 characterised in that, in an exchange of information between said memories comprising at least one of said transfers, said processor controls said selection means for selecting the program relating to the first of said transfers, said control means selecting the programs relating to the successive transfers until said programmed number of transfers is completed.

13. A system according to claim 12 characterised by a plurality of interrupt signals each of which is adapted to signal the occurrence of an anomalous condition in the transfer operation being performed, and by second selection means responsive to said signals for selecting a series of interrupt programs for generating commands adapted to control said anomalous transfer.

0026083

FIG.1

FIG.4

FIG.5

FIG.6

FIG.7

FIG.2

FIG.3

FIG.10

FIG.8

ABSDMA
STDMA
REQON
$\overline{ACK}$
STARO
DONEA
CAINI
SAL1-3   000   001   010   000
DMESO
CARCA
LAPIO
ABOR
DMINO
WP
WM
RDASI
$\overline{BUSRQ}$
$\overline{BUSAK}$
$\overline{DACK}$
IOR
$\overline{MEMW}$
$\overline{MERQ}$
ABSDMA   1° IND.   2° IND.
OUT10
OUT11
DBC

FIG.9

FIG. 11

European Patent Office

**EUROPEAN SEARCH REPORT**

## DOCUMENTS CONSIDERED TO BE RELEVANT

| Category | Citation of document with indication, where appropriate, of relevant passages | Relevant to claim |
|---|---|---|
| P | <u>DE - A1 - 2 921 419</u> (INTEL) (13-12-1979)<br><br>* Page 4, line 8 - page 6, line 3; page 7, line 29 - page 8, line 19; page 9, line 14 - page 11, line 18; fig.1a *<br><br>& GB-A -2 021 823 (05-12-1979)<br><br>& FR-A1-2 427 648 (28-12-1979)<br><br>-- | 1 |
|  | <u>DE - A1 - 2 748 991</u> (IBM)<br><br>* Page 4, lines 4-13; page 11, lines 6-21; page 12, line 21- page 15, line 28; fig.1 *<br><br>-- | 1-6 |
|  | <u>DE - A1 - 2 732 258</u> (BASF)<br><br>* Page 1, claim 1; page 4, lines 16-28; page 6, lines 20-25; fig.1a *<br><br>-- | 1 |
| X | <u>DE - A1 - 2 656 086</u> (SIEMENS)<br><br>* Page 1, claims 1,2; page 7, line 8 - page 9, line 5; fig.1 *<br><br>-- | 1-5 |
|  | <u>DE - A1 - 2 555 542</u> (LICENTIA)<br><br>* Page 3, lines 1-13; page 6, line 3 - page 10, line 10; fig.1 *<br><br>-- | 1 |
|  | <u>DE - A1 - 2 348 705</u> (SIEMENS)<br><br>* Page 1, line 24 - page 3, last line; fig.1,2 *<br><br>-- | 1 |

**CLASSIFICATION OF THE APPLICATION (Int. Cl. 3)**

G 06 F 15/16
G 06 F 5/00
G 06 F 13/00
H 03 K 13/24

**TECHNICAL FIELDS SEARCHED (Int.Cl. 3)**

G 06 F
H 03 K
H 04 L

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

| X | The present search report has been drawn up for all claims | |
|---|---|---|
| Place of search<br>VIENNA | Date of completion of the search<br>02-12-1980 | Examiner<br>NEGWER |

EPO Form 1503.1 06.78

## EUROPEAN SEARCH REPORT

European Patent Office

| | DOCUMENTS CONSIDERED TO BE RELEVANT | | CLASSIFICATION OF THE APPLICATION (Int. Cl. 3) |
|---|---|---|---|
| Category | Citation of document with indication, where appropriate. of relevant passages | Relevant to claim | |
| | DE - A - 1 437 652 (OLYMPIA) <br> * Page 1, first paragraph; page 2, line 28 - page 3, line 2; fig.1 * <br> -- | 1 | |
| | US - A - 4 077 034 (DELL) <br> * Abstract; column 3, line 48 - column 4, line 57; fig.2A, 2B * <br> -- | 1-5 | |
| | US - A - 3 761 697 (INTERNATIONAL STANDARD) <br> * Abstract; column 1, lines 54-60; column 4, lines 4-33; column 5, lines 3-14; column 8, claim 1; fig.1 * <br> ---- | 1, 11-13 | TECHNICAL FIELDS SEARCHED (Int. Cl. 3) |

EPO Form 1503.2  06.78